# EUROPÄISCHE PATENTSCHRIFT

(11) **EP 0 477 627 B1**
(45) Veröffentlichungstag und Bekanntmachung des Hinweises auf die Patenterteilung: **15.11.1995**
(21) Anmeldenummer: 91115115.7
(22) Anmeldetag: 06.09.1991
(51) Int. Cl.: H04Q 11/04, H04M 3/54, H04M 11/06

(54) **Verfahren zum Verbinden von Kommunikationsendgeräten in diensteintegrierenden Kommunikationsnetzen**
Method for connecting communication terminals in services integrating communication networks
Procédé pour connecter des terminaux de communication dans les réseaux de commutation à services integrés

(30) Priorität: 27.09.1990 DE 4030589
(43) Veröffentlichungstag der Anmeldung: 01.04.1992
(73) Patentinhaber: SIEMENS AKTIENGESELLSCHAFT, 80333 München (DE)
(72) Erfinder: Schallier, Walter, B-9810 Gent (BE)

(56) Entgegenhaltungen:
- EP-A- 0 350 918
- DE-A- 3 027 113
- DE-A- 3 644 228
- US-A- 4 958 153
- PATENT ABSTRACTS OF JAPAN vol. 10, no. 297 (E-444)(2353) 9. Oktober 1986
- PATENT ABSTRACTS OF JAPAN vol. 14, no. 483 (E-993)22. Oktober 1990
- Computer Communications,Vol. 11 , No. 4 , August 1988, London GB , Seiten 171 - 176 ; E. PEEL : " International Extension of ISDN and Terminal Implications ".

## Beschreibung

In zeitgemäßen digtalen Kommunikationsnetzen sind mehrere Dienste, wie z. B. Fernsprech-Dienst, Datendienst, Telefaxdienst, Teletexdienst, usw., in einem einzigen diensteintegrierenden Kommunikationsnetz zusammengefaßt. Die in einem derartigen Kommunikationsnetz vorgesehenen Eindienste- und Mehrdienste-Kommunikationsendgeräte werden über z. B. durch geeignete Steck- und Übertragungseinrichtungen realisierte Kommunikationsanschlüsse an programmgesteuerte digitale Kommunikationsvermittlungsanlagen herangeführt und in diesen dienstgerecht vermittelt bzw. miteinander verbunden. Für den Verbindungsaufbau zwischen den Kommunikationsendgeräten sind in diesen und in den Kommunikationsvermittlungsanlagen Verbindungsaufbauverfahren vorgesehen. Initialisiert werden derartige Verbindungsaufbauverfahren durch eine Wahlprozedur, die entweder manuell durch den Teilnehmer oder automatisch bzw. per Programm gesteuert wird. Im Rahmen eines Verbindungsaufbaus stellt das die Wahlprozedur einleitende Kommunikationsendgerät das Ursprungs-Kommunikationsendgerät und der durch die Wahlprozedur bestimmte Kommunikationsanschluß den Ziel-Kommunikationsanschluß dar. In den diensteintegrierenden Netzen können mit Hilfe der bekannten Verbindungsaufbauverfahren Kommunikationsbeziehungen zwischen Eindienste- oder Mehrdienste-Kommunikationsendgeräten nur jeweils des gleichen Dienstes, z. B. zwischen zwei Fernsprechkommunikationsendgeräten bzw. zwischen den Fernsprecheinrichtungen eines Mehrdienste-Kommunikationsendgerätes, hergestellt werden. Wird hierbei mit Hilfe des Verbindungsaufbauverfahrens festgestellt, daß bei dem durch die Wahlprozedur bestimmten Ziel-Kommunikationsanschluß ein ebenfalls durch die Wahlprozedur bestimmter Dienst, z. B. Datendienst oder Fernsprechdienst, nicht verfügbar ist - d. h. an den Kommunikationsanschluß ist kein Kommunikationsendgerät für den gewünschten Dienst angeschlossen - , so wird das Verbindungsaufbauverfahren abgebrochen und dem Ursprungs-Kommunikationsendgerät mitgeteilt, daß beim Ziel-Kommunikationsanschluß der betreffende Dienst nicht verfügbar ist.
Eine bekannte Möglichkeit, zu einem Ziel-Kommunikationsendgerät dennoch eine Kommunikationsbeziehung herzustellen, besteht in dem Einleiten eines Verbindungsaufbaus zu einer Dienste- bzw. Netzanpassungseinrichtung. Mit Hilfe dieser aufwendig zu realisierenden Dienste- bzw. Netzanpassungseinrichtung werden jeweils die Prozeduren und die physikalischen Eigenschaften von zwei Diensten, z. B. Telex- und Teletextdienst, angepaßt bzw. konvertiert. Neben dieser sehr aufwendigen Realisierung der Dienst- bzw. Netzanpassungseinrichtungen ist bei wesentlichen Diensten von Kommunikationsnetzen eine Anpassung nicht möglich, wie z. B. des Fernsprech- und Telexdienstes.

Desweiteren ist aus US 4 958 153 ein Verfahren für an einem ISDN-Kommunikationsanschluß ankommende Verbindungswünsche bekannt, bei dem die Reihenfolge der antwortenden Kommunikationsendgeräte durch Zuordnung unterschiedlicher Wartezeiten bestimmt wird. Vor einer Vermittlung des jeweiligen Kommunikationsendgerätes wird die Kompatibilität mit dem UrsprungsKommunikationsendgerät überprüft.

Aus Computer Communications, Vol. 11, No. 4, August 1988, London GB, Seiten 171 bis 176; E. PEEL, "International Extension of ISDN and Terminal Implications" ist weiterhin ein Verfahren für an eine ISDN-Kommunikationsvermittlungsanlage angeschlossene Faksimile-Endgeräte der Gruppe 3 und 4 bekannt. Hierbei wird zuerst eine Verbindung der Gruppe 3 bzw. 4 aufgebaut. Bleibt dieser Verbindungsaufbau erfolglos, wird ein Verbindungsaufbau gemäß Gruppe 4 bzw. 3 eingeleitet. Die Kommunikationsvermittlungsanlage ist bei diesem Verfahrenswechsel nicht involviert.

Die der Erfindung zugrunde liegende Aufgabe besteht darin, in einem diensteintegrierenden Kommunikationsnetz von einem UrsprungsKommunikationsendgerät eines Ursprungs-Kommunikationsanschlusses während eines Verbindungsaufbauverfahrens eine Verkehrsbeziehung zu einem durch die Wahlprozedur bestimmten Ziel-Kommunikationsanschluß zu ermöglichen, in dem der durch die Wahlprozedur bestimmte Dienst nicht verfügbar ist. Die Aufgabe wird ausgehend von einem diensteintegrierenden Kommunikationsnetz gemäß den Merkmalen des Oberbegriffs des Patentanspruchs 1 durch dessen kennzeichnende Merkmale gelöst.

Der wesentliche Aspekt der Erfindung ist darin zu sehen, daß bei Nichtverfügbarkeit eines Dienstes, z. B. Daten- oder Fernsprechdienst, beim Ziel-Kommunikationsanschluß mit Hilfe eines erweiterten Verbindungsaufbauverfahrens und der Kommunikationsvermittlungsanlage (KA) anhand in der Kommunikationsvermittlungsanlage (KA) kommunikationsanschlußindividuell registrierter Gruppen von verfügbaren Diensten ermittelt wird, ob am Ursprungs- und am Ziel-Kommunikationsanschluß zusätzliche Kommunikationsendgeräte mit gleichen Diensten verfügbar sind, über die eine Verkehrsbeziehung zwischen dem Ursprungs- und Ziel-Kommunikationsanschluß hergestellt werden kann. Ist zumindest ein gleichartiger Dienst an beiden Kommunikationsanschlüssen vorhanden bzw. sind entsprechende Kommunikationsendgeräte am Ziel- und Ursprungs-Kommunikationsanschluß für den ermittelten Dienst angeschlossen, so werden die entsprechenden Kommunikationsendgeräte mit Hilfe des erweiterten Verbindungsaufbauverfahrens miteinander verbunden, sofern nicht eines der beiden betroffenen Kommunikationsendgeräte bereits eine Verkehrsbeziehung mit einem weiteren Kommunikationsendgerät des diensteintegrierenden Netzes aufweist.

Ein wesentlicher Vorteil des erfindungsgemäßen Verfahrens ist darin zu sehen, daß ohne eine weitere Aktivität des Teilnehmers hinsichtlich des Einleitens zusätzlicher Prozeduren ausgehend von einem Ursprungskommunikationsendgerät eine Verkehrsbeziehung von einem Ursprungskommunikationsanschluß zu einem Ziel-Kommunikationsanschluß hergestellt werden kann, obwohl der ursprünglich durch die Wahlprozedur bestimmte Dienst beim Ziel-Kommunikationsanschluß nicht verfügbar ist. Ein weiterer wesentlicher Vorteil des erfindungsgemäßen Verfahrens ist darin zu sehen, daß die bekannten Verbindungsaufbauverfahren lediglich um ein Verfahren zum Überprüfen hinsichtlich der Verfügbarkeit weiterer Dienste beim Ziel- und beim Ursprungs-Kommunikationsanschluß ergänzt werden müssen. Für den ursprünglichen Verbindungsaufbau sowie auch für das Durchverbinden bzw. Herstellen der Verkehrsbeziehung zwischen den beiden Kommunikationsendgeräten bzw. Teileinrichtungen bei Mehrdienste-Kommunikationsendgeräten des ermittelten Dienstes kann das bekannte Verbindungsaufbauverfahren einbezogen werden.

Die nach einer vorteilhaften Ausgestaltung der Erfindung vorgesehene Dienstekombination der Gruppe von Diensten, der Fernsprech- und/oder der Datendienst, diese Dienstekombination erscheint besonders vorteilhaft, da sie zum einen in diensteintegrierenden Kommunikationsnetzen häufig vorzufinden ist und zum anderen nach dem Verbindungsaufbau des zusätzlichen Dienstes sofort eine Kommunikatonsbeziehung durch Sprache oder Bedienen einer Tastatur eines Datendienst-Kommunikationsendgerätes hergestellt werden kann.

Nach einer weiteren vorteilhaften Ausgestaltung der Erfindung wird bei mehreren gleichen Diensten, die am Ursprungs- und am Ziel-Kommunikationsanschluß verfügbar sind, der zu vermittelnde Dienst anhand der in der Gruppe von Diensten festgelegten Reihenfolge ermittelt. Die Gruppe kann hierbei für alle Kommunikationsanschlüsse, für Gruppen von Kommunikationsanschlüssen oder für einzelne Kommunikationsanschlüsse definiert werden. Im letzteren Fall kann entweder die Gruppe des Ursprungs-Kommunikationsanschlusses oder die Gruppe des Ziel-Kommunikationsanschlusses für die Ermittlung herangezogen werden.
Im Sinne einer zusätzlichen Information am Ursprungs-Kommunikationsendgerät kann an dieses nach dem Festellen der Nichtverfügbarkeit des durch die Wahlprozedur bestimmten Dienstes eine diese Nichtverfügbarkeit anzeigende Information übermittelt werden. Darüber hinaus kann durch eine entsprechende Eingabe am Urspungs-Kommunikationsendgerät aufgrund dieser Informationsübermittlung ein Unterbrechen des Verbindungsaufbaus oder eine Inanspruchnahme weiterer Leistungsmerkmale, wie zum Beispiel Anrufumleitung, Makeln usw. eingeleitet werden.
Analog hierzu ist nach dem Feststellen der Nichtverfügbarkeit von gleichen Diensten am Ursprungs- und Ziel-Kommunikationsanschluß an das Ursprungs-Kommunikationsendgerät eine diese Nichtverfügbarkeit anzeigende Information übermittelbar. Durch diese Informationsübermittlung kann die Nichtverfügbarkeit am Ursprungs-Kommunikationsendgerät angezeigt und durch Eingaben an diesem Ursprungs-Kommunikationsendgerät eine weitere vermittlungstechnische Aktivität, wie Inanspruchnahme von Leistungsmerkmalen, eingeleitet werden.

Im folgenden wird ein Ausführungsbeispiel des erfindungsgemäßen Verfahrens anhand von zwei figürlichen Darstellungen erläutert.

Dabei zeigen
- Figur 1: ein Blockschaltbild einer Kommunikationsvermittlungsanlage einschließlich Kommunikationsendgerätebereich und
- Figur 2: in einem Ablaufdiagramm den das erfindungsgemäße Verfahren realisierenden Verbindungsaufbauverfahren-Prgrammabschnitt.

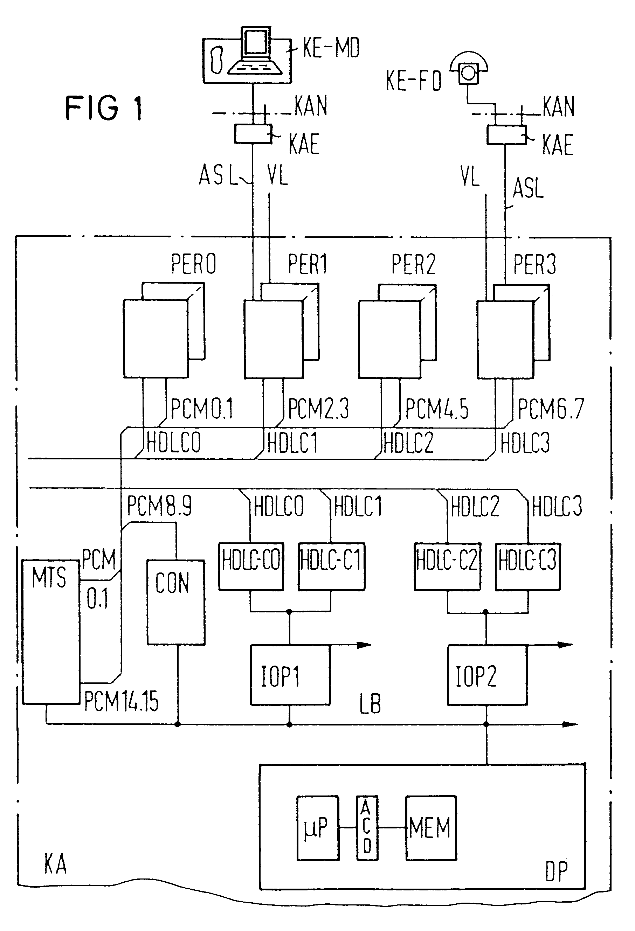

Figur 1 zeigt beispielhaft ein dem erfindungsgemäßen Verfahren zugrundeliegendes Mehrdienste-Kommunikationssystem, daß durch eine Mehrdienste-Kommunikationsvermittlungsanlage KA und durch an sie angeschlossene Kommunikationsendgeräte KE gebildet ist. Die Kommunikationsanlage KA ist im wesentlichen in drei hierarchische Strukturebenen unterteilt. Die im wesentlichen dem Anschluß von Endgeräten und Leitungen dienende Peripherieebene wird durch drei Peripheriemodule PER1, PER2, PER3 gebildet, die jeweils aus mehreren Kommunikationsendgeräte-Anschlußbaugruppen bzw. Leitungsanschlußbaugruppen derart gebildet sind, daß maximal 64 Ports- z. B. 16 Vierdraht-Leitungsanschlüsse - an einem Peripheriemodul PER1...PER3 zugänglich sind.
Die Kommunikationsendgeräte-Anschlußbaugruppen sind für den Anschluß von Mehrdienste-Kommunikationsendgeräten KE-MD und von Eindienste-Kommunikationsendgeräten KE-DD, KE-FD vorgesehen. Für das Ausführungsbeispiel sei angenommen, daß an die Kommunikationsendgeräte-Anschlußbaugruppe des ersten Peripheriemoduls PER1 ein ISDN-orientiertes, den Fernsprech- und den Datendienst realisierendes Mehrdienste-Kommunikaitonsendgerät KE-MD angeschlossen ist. Das Mehrdienste-Kommunikationsendgerät KE-MD wird über einen Kommunikationsanschluß KAN und eine digitale Anschlußleitung ASL an das erste Peripheriemodul PER1 herangeführt. Der Kommunikationsanschluß ist in einem diensteintegrierenden Kommunikationnetz durch eine bei CCITT standardisierte SO-Schnittstelle realisiert. An diese SO-Schnittstelle sind parallel mehrere Ein- oder Mehrdienste-Kommunikationsendgeräte KE anschließbar. In einer dem Kommunikationsanschluß KAN zugeordneten Kommunikationsanschlußeinrichtung KAE sowie im ersten Peripheriemodul PER1 ist für die digitale Übertragung der Informationen über die Anschlußleitung ASL eine integrierte Übertragungstechnik, z. B. die Echokompensationstechnik, vorgesehen. Für den Kommunikationsaustausch zwischen den Kommunikationsendgeräten KE und der Kommunikationsvermittlungsanlage KA ist das international standardisierte D-Kanal-Protokoll für diensteintegrierende Netze (ISDN) vorgesehen. In diesem Protokoll ist eine Diensteinformation enthalten, die bereits während des Verbindungsaufbaus der Kommunikationsvermittlungsanlage KA bzw. dem Kommunikationsendgerät KE anzeigt, welcher Dienst der kommenden oder gehenden Verbindung zugeordnet ist. Mit Hilfe dieser Diensteinformation wird eine ankommende Verbindung über den Kommunikationsanschluß an das den jeweiligen Dienst realisierende Kommunikationsendgerätes KE gesteuert.

Für das Ausführungsbeispiel sei angenommen, daß an das dritte Peripheriemodul PER3 über die Kommunikationsanschlußeinrichtung KAE ein den Fernsprechdienst realisierendes Kommunikationsendgerät KE-FD herangeführt ist.
An die Peripheriemodule PER1.. PER3 sind des weiteren Verbindungsleitungen VL anschließbar. Über diese Verbindungsleitungen VL werden die Kommunikationsanlagen KA untereinander vernetzt.

Die im wesentlichen durch Baugruppen-Prozessorsteuerungen und wenigstens einen der Koordinierung derselben dienenden Mikroprozessor gebildeten Modul-Prozessorsteuerungen verwalten jeweils zwei PCM-strukturierte Verbindungen (PCM Highways) PCM2, PCM3; PCM4, PCM5; PCM6, PCM7 und jeweils eine doppelt gerichtete Verbindung zur Übergabe und Aufnahme von Steuerinformationen, die im standardisierten Übertragungsverfahren HDLC (High Data Link Control) übertragen werden. Ein weiteres Peripheriemodul PER0 dient der Versorgung der Kommunikationsvermittlungsanlage KA mit Signalisierungstoninformationen, Ansagen und Musikeinspielungen während des Haltezustands von Verbindungen. Das zusätzliche Peripheriemodul PER0 enthält außerdem signalisierungsunterstützende Einrichtungen sowie Testeinrichtungen. Das zusätzliche Peripheriemodul PER0 ist in ähnlicher Weise wie die Peripheriemodule PER1, PER2, PER3 über zwei PCM-Highways PCM0, PCM1 sowie über eine Informationsübertragungsstrecke HDLC0 angeschaltet.

Die nächste Strukturebene des digitalen Kommunikationssystems wird durch insgesamt vier (Steuerinformation-) Übermittlungsbausteine HDLC-C0, HDLC-C1, HDLC-C2, HDLC-3 (HDLC-Controller) sowie durch zwei Input/Output-Prozessoren IOP1,IOP2 gebildet, von denen der Input/Output-Prozessor IOP1 den beiden Übermittlungsbausteinen HDLC-C0 und HDLC-C1, der Input/Output-Prozessor IOP2 dagegen den Übermittlungsbausteinen HDLC-C2, HDLC-C3 zugeordnet ist. Da die HDLC-Norm für den Austausch von Daten, Befehlen und Meldungen in vielen einschlägig praktisch realisierten Systemen benutzt wird, sind entsprechende (Steuerinformation-) Übermittlungsbausteine in Form integrierter Schaltkreise realisiert; die in der Figur 1 dargestellte Kommunikationsvermittlungsanlage nutzt diese Bausteine (HDLC-Controller) in der üblichen Weise, so daß keine Hardware- oder Softwareanpassungen für den Einsatz dieser Bausteine in der Kommunikationsvermittlungsanlage erforderlich sind. Im Rahmen der Kommunikationsvermittlungsanlage ist in den in der HDLC-Norm festgelegten Datenübertragungsblöcken das Blockprüfungsfeld von besonderer Bedeutung, da mit der in diesem Feld übertragenen Blochprüfzeichenfolge eine gegen Fehler gesicherte Übergabe von Steuerinformationen möglich ist.
In die gleich Strukturebene wie die (Steuerinformation-) Übermittlungsbausteine HDLC-C0... HDLC-C3 gehört auch ein digitaler Koppelfeldbaustein MTS, an den sämtliche PCM-Highways PCM0, PCM1... PCM14, PCM15 angeschlossen sind. Der digitale Koppelfeldbaustein MTS ist beispielsweise durch den integrierten Schaltkreis PEB 2040, Siemens AG, realisiert. Aufbau und Wirkungsweise eines digitalen Koppelfeldbausteins sind beispielsweise in der US-Patentschrift 3678206 beschrieben.
Ebenfalls in die Strukturebene der Übermittlungsbausteine HDLC-C0 ... HDLC-C3 und des digitalen Koppelfeldbausteines MTS eingefügt ist ein Konferenz-Netzwerk CON, das mit zwei weiteren PCM-Highways PCM8, PCM9 an den digitalen Koppelfeldbaustein MTS angeschlossen ist. Eine mögliche Realisierung für das Konferenz-Netzwerk CON ist in der US-Patentschrift 4054757 beschrieben.

Der digitale Koppelfeldbaustein MTS und das Konferenz-Netzwerk CON sind ebenso wie die beiden Input/Output-Prozessoren IOP1, IOP2 an einen lokalen Multiplexbus LB angeschlossen, der die Schnittstelle zur hierarchisch obersten Strukturebene der digitalen Kommunikationsanlage darstellt. Diese Strukturebene wird durch einen zentralen Steuerprozessor DP gebildet, der das Zusammenwirken aller Bausteine und Module der Kommunikationsanlage KA koordiniert. Neben takterzeugenden Einrichtungen ist der zentrale Steuerprozessor DP mit einem Mikroprozessor µP, einer vorgeschalteten Zugangssteuerung ACO und einem Speicher MEM ausgestattet. In diesem Speicher MEM sind die vermittlungstechnische Datenbasis und alle vermittlungstechnisch relevanten Programme gespeichert. Wesentliche Funktionen des zentralen Steuerprozessor DP sind also die Speicherung und anforderungsgerechte Abarbeitung von vermittlungstechnischen Programmen und peripheriezugewandt die Steuerung und Überwachung des lokalen Busses LB. Zusätzliche übliche Funktionen des zentralen Steuerprozessors DP sind betriebstechnische Abwicklungen, sicherheitstechnische Anzeigen sowie Takterzeugungen.
Für den Verbindungsaufbau zwischen den Kommunikationsendgeräten KE ist ein programmtechnisch realisiertes Verbindungsaufbauverfahren vorgesehen. Hierbei sind die mit den Kommunikationsendgeräten KE die Signalisierungsprotokolle abwickelnden Verbindungsaufbau-Teilverfahren bzw. Programmodule vorwiegend in den Peripheriemodulen PER1...PER3 realisiert. Die der Berechtigungsprüfung hinsichtlich Dienste, Merkmalen usw. sowie der Verbindungssteuerung über die digitalen Koppelfeldbausteine MTS dienenden Verbindungsaufbau-Teilverfahren bzw. Programmodule sind dagegen im zentralen Steuerprozessor DP implementiert. Demzufolge ist das vorzugsweise programmtechnisch realisierte erfindungsgemäße Verfahren als Verbindungsaufbau-Teilverfahren bzw. Programmodul im zentralen Steuerprozessor DP realisiert.

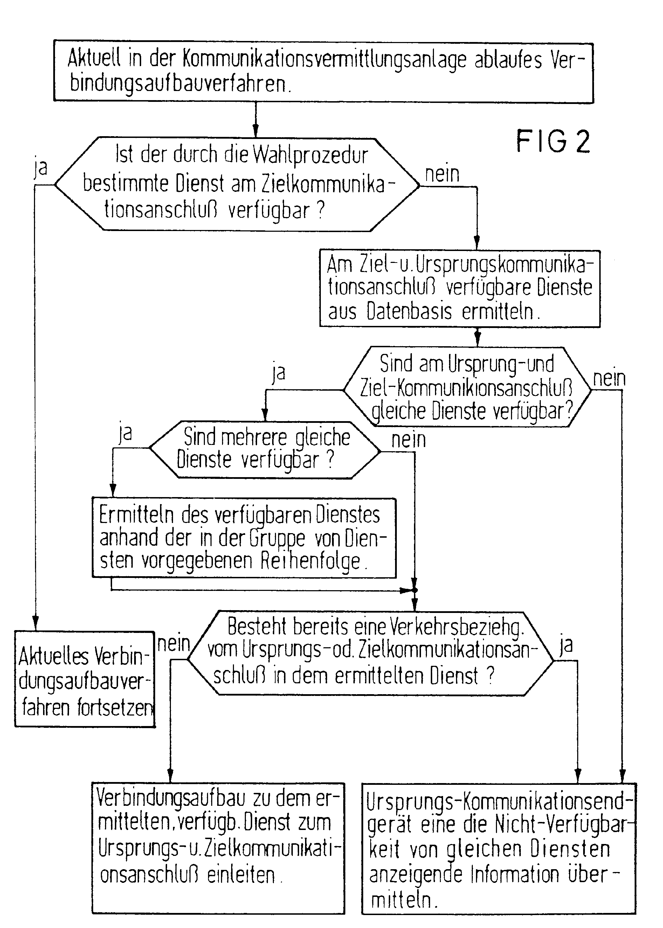

In Figur 2 ist das Ablaufdiagramm des erfindungsgemäßen Verfahrens und deren Einbindung in das vorhandene Verbindungsaufbauverfahren dargestellt. Als Verbindungsaufbauverfahren ist, wie bereits erläutert, das D-Kanal-Protokoll für diensteintegrierende Netze (ISDN) vorgesehen. Für das Ausführungsbeispiel sei angenommen, daß vom Mehrdienste-Kommunikationsendgerät KE-MD ein Verbindungsaufbau im Datendienst eingeleitet wird, bei dem durch die Wahlprozedur der Kommunikationsanschluß KAN bestimmt ist, an den nur das den Fernsprechdienst realisierende Kommunikationsendgerät KE-FD angeschlossen ist. Die Überprüfung des durch die Wahlprozedur bestimmten Dienstes sowie die Überprüfung der am Ziel- und Ursprungs-Kommunikationsanschluß verfügbaren Dienste mit Hilfe der durch die Verbindungsaufbauverfahren übermittelte oder durch aus der Datenbasis gelesene Diensteinformationen ergibt, daß am durch die Wahlprozedur bestimmten Kommunikationsanschluß KAN kein den Datendienst realisierendes Kommunikationsendgerät verfügbar ist. Nach dem Ermitteln des am Ursprungs- und Zielkommunikationsanschluß KAN gleichen, verfügbaren Dienst - im Ausführungsbeispiel des Fernsprechdienstes - wird mit geänderter Diensteinformation das bereits für den Verbindungsaufbau vom Ursprungs- zum Zielkommunikationsanschluß KAN vorgesehene Verbindungsaufbauverfahren zu dem betroffenen Eindienste-Kommunikationsendgerät KE-FD erneut eingeleitet. Bei einer geeigneten Änderung des standardisierten Verbindungsaufbauverfahrens in der Kommunikationsvermittlungsanlage KA und in den Kommunikationsanschlußeinrichtungen KAE können die Diensteumsteuerungen an den Kommunikationsanschlüssen KAN ohne einen erneuten Verbindungsaufbau durchgeführt werden. Bei einer derartigen Änderung des standardisierten Verbindungsaufbauverfahrens sind weitere Verfahrensänderungen hinsichtlich bereits bestehender Verkehrsbeziehungen vom Ursprungs- oder Zielkommunikationsanschluß KAN zu einem weiteren Kommunikatonsanschluß KAN des diensteintegrierenden Netzes bezüglich des ermittelten Dienstes zu berücksichtigen. Nach der Umsteuerung auf den ermittelten Dienst an den Kommunikationsanschlüssen KAN kann das Verbindungsaufbauverfahren hinsichtlich Steuerung der Koppelfeldbaussteine MTS wie üblich fortgesetzt werden. Bei einer Umsteuerung gemäß Ausführungsbeispiel auf den Fernsprechdienst wird hierbei der den Fernsprechdienst realisierende Teil der Mehrdienste-Kommunikationsendgerätes KE-MD mit dem Fernsprechendgerät KE-FD verbunden bzw. eine Kommunikation zwischen diesen ermöglicht.

## Patentansprüche

1. Verfahren zum Verbinden von mit Kommunikationsanschlüssen (KAN) verbundenen Ein- und Mehrdienste-Kommunikationsendgeräten (KE) in einem diensteintegrierenden Kommunikationsnetz, in dem von einem Ursprungs-Kommunikationsendgerät (KE) mit Hilfe einer Kommunikationsvermittlungsanlage (KA) ein dienstespezifische Verbindungsaufbau zu einem durch die Wahlprozedur bestimmten Ziel-Kommunikationsanschluß (KAN) eingeleitet wird, und in dem durch die Verbindungsaufbauprozedur das Vorhandensein eines den betreffenden Dienst realisierenden Ein- oder Mehrdienstekommunikationsendgerätes (KE-DD, KE-FD, KE-MD) am Ziel-Kommunikations anschluß (KAN) überprüft wird,
**dadurch gekennzeichnet**,
daß bei Nichtvorhandensein eines den betreffenden Dienst realisierenden Kommunikationsendgerätes (KE) mit Hilfe einer erweiterten Verbindungsaufbauprozedur und der Kommunikationsvermittlungsanlage (KA) anhand in der Kommunikationsvermittlungsanlage (KA) kommunikationsanschlußindividuell registrierter Gruppen von verfügbaren Diensten ermittelt wird, ob aus der registrierten Gruppe von Diensten ein zumindest denselben Dienst realisierendes Kommunikationsendgerät (KE) sowohl am Ziel-Kommunikationsanschluß als auch am Ursprungs-Kommunikationsanschluß (KAN) verfügbar ist, und daß nach dem Feststellen eines denselben Dienst realisierenden Ursprungs- und Ziel-Kommunikationsendgerätes (KE) diese mit Hilfe der erweiterten Verbindungsaufbauprozedur der Kommunikationsvermittlungsanlage (KA) dienstgerecht verbuncen werden, sofern die den ermittelten Diensten zugeordneten Kommunikationsendgeräte (KE) nicht durch bereits vorhandene Kommunikationsbeziehungen in dem diensteintegrierenden Kommunikationsnetz belegt sind.

2. Verfahren nach Anspruch 1,
**dadurch gekennzeichnet**,
daß die den Kommunikationsanschlüssen (KAN) zugeordnete Gruppen daß die den Kommunikationsanschlüssen (KAN) zugeordnete Gruppen von Diensten den Daten- und/oder den Fernsprechdienst umfassen.

3. Verfahren nach mindestens einem der vorhergehenden Ansprüche,
**dadurch gekennzeichnet**,
daß bei Vorhandensein mehrerer am Ursprungs- und Ziel-Kommunikationsanschluß (KAN) verfügbare, gleiche Dienste realisierende Kommunikationsendgeräte (KE) der zu vermittelnde Dienst anhand der in der Gruppe von Diensten festgelegten Reihenfolge ermittelt wird.

4. Verfahren nach mindestens einem der vorhergehenden Ansprüche, **dadurch gekennzeichnet**, daß nach dem Feststellen der Nichtverfügbarkeit von Kommunikationsendgeräten (KE) des durch die Wahlprozedur bestimmten Dienstes an das UrsprungsKommunikationsendgerät (KE) eine diese Nichtverfügbarkeit anzeigende Information übermittelt wird.

5. Verfahren nach mindestens einem der vorhergehenden Ansprüche, **dadurch gekennzeichnet**, daß nach dem Feststellen der Nichtverfügbarkeit von gleiche Dienste realisierende Kommunikationsendgeräten (KE) am Ursprungs- und am Ziel-Kommunikationsanschluß (KAN) an das Ursprungs-kommunikationsendgerät (KE) eine diese Nichtverfügbarkeit anzeigende Information übermittelt wird.

## Claims

1. Method for connecting single-service and multi-service communication terminals (KE), connected to communication connections (KAN), in an integrated-services communication network, in which a service-specific connection set-up to a destination communication connection (KAN) determined by the dialling procedure is initiated by a source communication terminal (KE) with the aid of a communication exchange (KA), and in which the presence of a single-service or multi-service communication terminal (KE-DD, KE-FD, KE-MD), realizing the service concerned, at the destination communication connection (KAN) is checked by the connection set-up procedure, characterized in that, in the absence of a communication terminal (KE) realizing the service concerned, it is determined with the aid of an extended connection set-up procedure and the communication exchange (KA), on the basis of groups of available services registered individually for each communication connection in the communication exchange (KA), whether from the registered group of services a communication terminal (KE) realizing at least the same service is available both at the destination communication connection and at the source communication connection (KAN), and in that, after establishing a source and a destination communication terminal (KE) realizing the same service, these are connected appropriately for this service with the aid of the extended connection set-up procedure of the communication exchange (KA), provided that the communication terminals (KE) assigned to the services determined are not occupied by already existing communication relationships in the integrated-services communication network.

2. Method according to Claim 1, characterized in that the groups of services assigned to the communication connections (KAN) comprise the data and/or telephone service.

3. Method according to at least one of the preceding claims, characterized in that, in the presence of a plurality of communication terminals (KE) realizing the same services and available at the source and the destination communication connection (KAN), the service to be provided is determined on the basis of the sequence fixed in the group of services.

4. Method according to at least one of the preceding claims, characterized in that, after establishing the non-availability of communication terminals (KE) of the service determined by the dialling procedure, an information item indicating this non-availability is transmitted to the source communication terminal (KE).

5. Method according to at least one of the preceding claims, characterized in that, after establishing the non-availability of communication terminals (KE) realizing the same services at the source and the destination communication connection (KAN), an information item indicating this non-availability is transmitted to the source communication terminal (KE).

## Revendications

1. Procédé pour relier des terminaux (KE) de communication ayant un seul service ou plusieurs services reliés à des raccordements de commutation (KAN), dans un réseau de communication à intégration de services, dans lequel on déclenche l'établissement d'une liaison, spécifique au service, avec un raccordement de communication de destination (KAN) désigné par la procédure de sélection par un terminal de communication d'origine (KE) à l'aide d'une installation de commutation de communication (KA), et dans lequel on contrôle par la procédure d'établissement de liaison, la présence d'un terminal de communication à un seul service ou à plusieurs services (KE-DD, KE-FD, KE-MD) fournissant le service considéré sur le raccordement de communication de destination (KAN),
caractérisé par le fait
qu'en cas d'absence d'un terminal de communication (KE) fournissant le service considéré, on détermine à l'aide d'une procédure étendue d'établissement de liaison et de l'installation de commutation de communication (KA) sur la base de groupes, enregistrés individuellement pour chaque raccordement de communication dans l'installation de commutation de communication (KA), de services disponibles, si à partir du groupe enregistré de services un terminal de communication (KE) fournissant au moins le même service est disponible à la fois sur le raccordement de communication de destination et dans le raccordement de communication d'origine (KAN), et qu'après détermination d'un terminal de communication de départ et d'un terminal de communication de destination (KE), fournissant le même service, on relie ces terminaux, d'une manière correspondant au service, à l'aide de la procédure étendue d'établissement de liaison de l'installation de commutation de communication (KA), dans la mesure où les terminaux de communication (KE) associés aux services déterminés ne sont pas occupés par des relations de communication déjà existantes, dans le réseau de communication à intégration de services.

2. Procédé suivant la revendication 1, caractérisé par le fait que les groupes, associés aux raccordements de communication (KAN), de services englobent le service de transmission de données et/ou le service téléphonique.

3. Procédé suivant au moins l'une des revendications précédentes, caractérisé par le fait que dans le cas de la présence de plusieurs terminaux de communication (KE), disponibles dans le raccordement de communication d'origine et dans le raccordement de communication de destination (KAN) et fournissant des services identiques, on détermine le service devant être commuté sur la base de la succession fixée dans le groupe de services.

4. Procédé suivant au moins l'une des revendications précédentes, caractérisé par le fait qu'après détermination de l'indisponibilité de terminaux de commutation (KE) du service déterminé par la procédure de sélection, on transmet une information signalant cette indisponibilité au terminal de communication d'origine (KE).

5. Procédé suivant au moins l'une des revendications précédentes, caractérisé par le fait qu'après la détermination de l'indisponibilité de terminaux de communication (KE) fournissant des services identiques sur le raccordement de communication d'origine et sur le raccordement de communication de destination (KAN), on transmet une information indiquant cette indisponibilité au terminal de communication d'origine.
